# EUROPÄISCHE PATENTSCHRIFT

(11) **EP 2 648 481 B1**
(45) Veröffentlichungstag und Bekanntmachung des Hinweises auf die Patenterteilung: **07.10.2015**
(21) Anmeldenummer: 12163009.9
(22) Anmeldetag: 03.04.2012
(51) Int. Cl.: H05B 33/08

(54) **Adapter zum Anschluss von LED-Lampen an eine Spannungsversorgung mit Funktionsüberwachung für Glühlampen**
Adapter for connecting LED lights to a power supply with function monitoring for bulbs
Adaptateur destiné au raccordement de lampes à DEL sur une alimentation en tension dotée d'une surveillance de fonction pour lampes à incandescence

(43) Veröffentlichungstag der Anmeldung: 09.10.2013
(73) Patentinhaber: Rüttgerodt, Werner, 34355 Staufenberg (DE)
(72) Erfinder: Rüttgerodt, Werner, 34355 Staufenberg (DE)
(74) Vertreter: REHBERG HÜPPE + PARTNER

(56) Entgegenhaltungen:
- DE-A1-102004 045 435
- FR-A1- 2 900 534
- US-A1- 2011 062 869

## Beschreibung

### TECHNISCHES GEBIET DER ERFINDUNG

Die Erfindung betrifft einen Adapter zum Anschluss von LED-Lampen an eine Spannungsversorgung mit einer Funktionsüberwachungseinrichtung für Glühlampen.

Viele Kraftfahrzeuge weisen eine Funktionsüberwachungseinrichtung für die Glühlampen ihrer Beleuchtungseinrichtung auf. Diese Funktionsüberwachungseinrichtung überwacht auch die Beleuchtungseinrichtung eines Anhängers oder eines Heckträgers, die über eine Anhängersteckdose an die Elektrik des jeweiligen Kraftfahrzeugs angeschlossen ist.

Wenn die Beleuchtungseinrichtung des Anhängers oder Heckträgers LED-Lampen aufweisen soll, so ist nicht nur die übliche Versorgungsspannung von 12 V oder 24 V des Kraftfahrzeugs auf die Betriebsspannung der LED herabzusetzen, sondern es ist auch dafür Sorge zu tragen, dass der gegenüber einer Glühlampe grundsätzlich geringere Verbrauch von elektrischer Leistung durch eine oder mehrere LEDs nicht zu einer Fehlermeldung der Funktionsüberwachungseinrichtung führt, die auf den höheren Verbrauch von Glühlampen abgestimmt ist.

### STAND DER TECHNIK

Aus der EP 2 000 358 A1 ist eine Schaltungsanordnung zur Zwischenschaltung in eine elektrische Verbindung zwischen einer Spannungsquelle eines Zugfahrzeugs und einer Leuchte eines Zugfahrzeuganhängers bekannt, die einen Anschluss zur elektrischen Verbindung mit einem für eine Glühlampe ausgelegten zugfahrzeugseitigen Anschluss aufweist. Dieses Dokument betrifft darüber hinaus einen Adapter mit einer solchen Schaltungsanordnung sowie ein Verfahren zum Überwachen einer Anhängerleuchte. Die Schaltungsanordnung weist eine Diagnoseeinrichtung sowie eine Glühlampensimulationseinheit auf, mittels welcher ein elektrischer Widerstand einer Glühlampe simulierbar ist. Die Diagnoseeinrichtung weist eine Strommesseinheit und eine Vergleichseinheit auf, wobei die Strommesseinheit den Verbrauchsstrom der Leuchte des Anhängers misst und ein entsprechendes Signal an die Vergleichseinheit abgibt. Die Vergleichseinheit vergleicht das gelieferte Signal der Strommesseinheit mit einem vorgegebenen Vergleichswert. Die Glühlampensimulationseinheit wird in Abhängigkeit des Vergleichsergebnisses gesteuert. Diese Steuerung erfolgt derart, dass ein zu kleiner Verbrauchsstrom der Leuchte, wie er bei Ausfall einzelner parallel geschalteter Leuchten oder bei Beschädigung von LED auftreten kann, auch zu einem Strom mit geringerer Stromstärke durch die Glühlampensimulationseinheit führt, die einem Anschluss für die Leuchte parallel geschaltet ist und aus einem mit einem Halbleiterschalter in Reihe geschalteten Widerstand besteht. Wenn hingegen ein Kurzschluss im Bereich der Leuchte auftritt, wird auch die Stromstärke des Stroms durch die Glühlampensimulationseinheit erhöht. Eine Funktionsüberwachungseinrichtung des Kraftfahrzeugs, die den von der Spannungsversorgung des Kraftfahrzeugs abfließenden Verbrauchsstrom erfasst, erkennt so Fehler im Bereich der Leuchte des Zugfahrzeuganhängers sinnrichtig, d. h. ein Fehler mit zu geringem Verbrauch der LED-Lampe wird in einen Fehler mit zu geringem Verbrauch einer simulierten Glühlampe umgesetzt, während ein Fehler mit zu hohem Verbrauch der LED-Lampe in einen Fehler mit zu hohem Verbrauch bis hin zu einem Kurzschluss der simulierten Glühlampe umgesetzt wird.

Die aus der EP 2 000 358 A1 bekannte Schaltungsanordnung ist jedoch relativ aufwändig und entsprechend kostspielig in ihrer Herstellung.

Aus der EP 1 653 782 B1 ist ein LED-Kontrollgerät für Fahrzeugleuchten bekannt, das die Merkmale des Oberbegriffs des unabhängigen Patentanspruchs aufweist. Dieses LED-Kontrollgerät weist eine Strommessschaltung auf, die mit einem Komparator für den Vergleich des von der Fahrzeugleuchte aufgenommenen Stroms mit zwei eingestellten Grenzwerten verbunden ist. Der Ausgang des Komparators ist an einen zur Strommessschaltung führenden Hauptschalter sowie an eine Konstantstrom-Regelungsschaltung angeschlossen, mit der beim Einschalten der Fahrzeugleuchte der Strom einer Glühlampe simuliert wird und die vor dem Hauptschalter von der zu der Fahrzeugleuchte führenden Leitung abzweigt. Liegt der Wert des gemessenen Stroms unter einer Mindestgrenze, so wird die Stromregelung ausgeschaltet und der Hauptschalter wird geöffnet. Auch dann, wenn der Wert des gemessenen Stroms über einem vorgegebenen Maximalwert liegt, weil ein Kurzschluss vorhanden ist, wird die Konstantstrom-Regelungsschaltung ausgeschaltet und der Hauptschalter geöffnet. Wenn der gemessene Strom hingegen zwischen dem Mindestwert und dem Maximalwert liegt, setzt eine Stromregelung ein, bei der der insgesamt aufgenommene Strom durch eine Konstantstromregelung dem Wert einer Glühlampe angeglichen wird.

Obwohl bei dem aus der EP 1 653 782 B1 bekannten LED-Kontrollgerät Fehler einer angeschlossenen LED-Lampe nicht sinnrichtig erkannt werden, weil unabhängig vom Auftreten eines Kurzschlusses oder eines reduzierten Stroms der Hauptschalter immer geöffnet und die Konstantstrom-Regelungsschaltung abgeschaltet wird, ist der Gesamtaufbau des LED-Kontrollgeräts komplex und entsprechend kostspielig. Dabei ist zu bedenken, dass bei einem mehrpoligen Adapter zum Anschluss mehrerer LED-Lampen einer Beleuchtungseinrichtung eines Anhängers oder Heckträgers auch mehrerer Strommessschaltungen und Konstantstrom-Regelungsschaltungen sowie Hauptschalter vorhanden sein müssen.

Eine Überwachungseinrichtung für eine LED-Lampe, die die Merkmale des Oberbegriffs des unabhängigen Patentanspruchs 1 aufweist, ist aus der DE 10 2004 045 435 A1 bekannt. Hier weist die Glühlampenverbrauchssimulationsschaltung eine Reihenschaltung eines Schalters mit einem Ersatzwiderstand auf. Die Verzweigung zu der Glühlampenverbrauchssimulationsschaltung liegt vor dem Hauptschalter in der von dem Eingang der Überwachungseinrichtung zu dem Ausgang für den Anschluss der LED-Lampe führenden Leitung. Der Hauptschalter ist mit einem Shunt zur Erfassung der Stromstärke des Stroms zu der LED-Lampe in Reihe geschaltet. Abhängig von der Stromstärke des Stroms wird der mit dem Ersatzwiderstand in Reihe geschaltete Schalter von der Logik betätigt. Wenn die Logik den typischen Verbrauch der LED-Lampe anhand des zu ihr fließenden Stroms erkennt, schaltet sie durch Schließen des Schalters den Ersatzwiderstand ein. Wenn die abgenommene Leistung zu groß wird, wird der Hauptschalter geöffnet und auch der Schalter bleibt offen, um den Ersatzwiderstand nicht einzuschalten. Die Glühlampenverbrauchssimulationsschaltung weist bei geschlossenem Schalter den ohmschen Widerstand des Ersatzwiderstands und bei offenem Schalter einen unendlichen ohmschen Widerstand auf.

### AUFGABE DER ERFINDUNG

Der Erfindung liegt die Aufgabe zugrunde, einen Adapter zum Anschluss von LED-Lampen an eine Spannungsversorgung mit einer Funktionsüberwachungseinrichtung für Glühlampen aufzuzeigen, der einfach aufgebaut ist und dennoch eine zuverlässige Erkennung von Fehlern der angeschlossenen LED-Lampen durch die Funktionsüberwachungseinrichtung für Glühlampen sicherstellt.

### LÖSUNG

Die Aufgabe der Erfindung wird durch einen Adapter mit den Merkmalen des unabhängigen Patentanspruchs 1 gelöst. Bevorzugte Ausführungsformen des neuen Adapters sind in den abhängigen Patentansprüchen 2 bis 11 beschrieben. Patentanspruch 12 ist auf einen Adapterstecker für den Anschluss einer Beleuchtungseinrichtung, insbesondere für ein Kfz-Anhänger oder Kfz-Heckträger, mit einer LED-Lampe an eine Anhängersteckdose gerichtet, wobei der Adapterstecker einen erfindungsgemäßen Adapter aufweist. Der Patentanspruch 13 ist auf eine Beleuchtungsvorrichtung, insbesondere für einen Kfz-Anhänger oder Kfz-Heckträger, gerichtet, die eine LED-Lampe und den erfindungsgemäßen Adapter oder Adapterstecker aufweist.

### BESCHREIBUNG DER ERFINDUNG

Bei einem erfindungsgemäßen Adapter zum Anschluss von LED-Lampen an eine Spannungsversorgung mit einer Funktionsüberwachungseinrichtung für Glühlampen weist der Adapter eine parallel zu einem Ausgang für den Anschluss einer LED-Lampe geschaltete Glühlampenverbrauchssimulationsschaltung, eine Stromstärkenerfassungsschaltung zur Erfassung der Stromstärke des Stroms durch eine von einem Eingang des Adapters zu dem Ausgang für den Anschluss der LED-Lampe führenden Leitung und einen Hauptschalter auf. Dieser Hauptschalter ist in der von dem Eingang des Adapters zu dem Ausgang für den Anschluss der LED-Lampe führenden Leitung vorgesehen und wird von der Stormstärkenerfassungsschaltung beim Auftreten einer Stromstärke oberhalb eines Grenzwerts geöffnet.

Die Glühlampenverbrauchssimulationsschaltung weist einen festen ohmschen Widerstand auf, d.h., sie ist ungeregelt. Im einfachsten Fall besteht sie aus einem einzigen elektrischen Widerstand. Sie kann auch aus einer Reihen- und/oder Parallelschaltung elektrischer Widerstände bestehen, um einen bestimmten festen ohmschen Widerstand einzustellen. Dieser feste ohmsche Widerstand der Glühlampenverbrauchssimulationsschaltung ist bei dem erfindungsgemäßen Adapter so abgestimmt, dass die Funktionsüberwachungseinrichtung zumindest dann auf einen Fehler einer angeschlossenen Glühlampe erkennt, wenn kein Strom durch die LED-Lampe fließt. Anders gesagt ist der Verbrauch der Glühlampenverbrauchssimulationsschaltung allein nicht ausreichend, um der Funktionsüberwachungseinrichtung für Glühlampen eine funktionierende Glühlampe anzuzeigen. Hierzu wird vielmehr der zusätzliche Verbrauch der ordnungsgemäß arbeitenden LED-Lampe benötigt.

Wenn hier von einem Widerstand die Rede ist, wird zwischen dem Bauteil und der physikalischen Größe mit derselben Bezeichnung durch Verwendung der Adjektive "elektrischer" bzw. "ohmscher" unterschieden.

Die Reaktion des erfindungsgemäßen Adapters auf einen Kurzschlussstrom durch die LED-Lampe besteht in einem Öffnen des Hauptschalters. Insoweit wird ein solcher Kurzschluss im Gegensatz zu einem Fehler der LED-Lampe, der zu einem reduzierten Verbrauch führt, der Funktionsüberwachungseinrichtung für Glühlampen nicht sinnrichtig angezeigt. Dies ist jedoch unkritisch, weil derartige Funktionsüberwachungseinrichtungen regelmäßig nicht nach der Art des Fehlers unterscheiden und weil durch das Öffnen des Hauptschalters das Weiterfließen eines Kurzschlussstroms sogar in sinnvoller Weise unterbunden wird.

In jedem Fall ist der Grenzwert für die Stromstärke, bei der die Stromstärkenerfassungsschaltung den Hauptschalter öffnet, so abzustimmen, dass ein Kurzschlussstrom durch die LED-Lampe zum Öffnen des Hauptschalters führt.

Vorzugsweise ist bei dem erfindungsgemäßen Adapter der Hauptschalter vor der Verzweigung zu der Glühlampenverbrauchssimulationsschaltung in der von dem Eingang des Adapters zu dem Ausgang für den Anschluss der LED-Lampe führenden Leitung vorgesehen. Auf diese Weise schaltet der Hauptschalter beim Öffnen durch die Stromstärkenerfassungsschaltung auch den Strom durch die Glühlampenverbrauchssimulationsschaltung ab. Dieses Abschalten ist für ein Ansprechen der Glühlampenüberwachungseinrichtung jedoch nicht erforderlich.

Wenn die Stromstärkenerfassungsschaltung die Stromstärke des Stroms durch den Hauptschalter erfasst und der Hauptschalter vor der Verzweigung zu der Glühlampenverbrauchssimulationsschaltung vorgesehen ist, ist bei dem Grenzwert für die Stromstärke, bei der der Stromstärkenerfassungsschaltung den Hauptschalter öffnet, der Strom durch die Glühlampenverbrauchssimulationsschaltung als positiver Offset zu berücksichtigen. Dieser zusätzliche Strom ist bei bevorzugten Ausführungsformen des erfindungsgemäßen Adapters, in denen die Stromstärkenerfassungsschaltung die Stromstärke oberhalb des Grenzwerts aufgrund einer Temperaturerhöhung eines von dem Strom mit der Stromstärke durchflossenen Bauteils erkennt, jedoch sogar hilfreich, weil eine Grundtemperatur dieses Bauteils bereits durch den Strom durch die Glühlampenverbrauchssimulationsschaltung hervorgerufen wird.

Als von dem Strom mit der Stromstärke durchflossenes Bauteil, dessen Temperatur als Maß für die Stromstärke überwacht wird, kann insbesondere ein elektrischer Widerstand genutzt werden, der zusammen mit der parallel zu dem Ausgang für den Ausschluss der LED-Lampe geschalteten Glühlampenverbrauchssimulationsschaltung einen Spannungsteiler ausbildet, wie er zum Herabsetzen einer Spannung der Spannungsversorgung auf die Betriebsspannung der LED-Lampe sowieso benötigt wird. Dabei ist es leicht möglich, den weiteren elektrischen Widerstand so auszulegen, dass er im Falle eines Kurzschlusses der LED-Lampe signifikant erwärmt wird.

Die Temperaturerhöhung des von dem Strom mit der Stromstärke durchflossenen Bauteils wird in dem erfindungsgemäßen Adapter vorzugsweise durch ein mit dem Bauteil thermisch gekoppeltes weiteres Bauteil erfasst, das temperaturabhängige elektrische Eigenschaften aufweist. Dabei kommt es in aller Regel nicht auf die Erfassung der genauen Temperatur des Bauteils sondern nur auf das Erkennen eines signifikanten Temperaturanstiegs des Bauteils an, der einen Kurzschluss der LED-Lampe anzeigt. Ein solcher Temperaturanstieg kann zum Beispiel leicht mit einem temperaturabhängigen Widerstand erfasst werden. Dieser Widerstand kann zum Beispiel Teil eines weiteren Spannungsteilers sein, dessen Ausgangsspannung sich mit dem Anstieg des ohmschen Widerstands des temperaturabhängigen Widerstands ändert und sogar direkt zur Ansteuerung eines als Halbleiterschalter ausgebildeten Hauptschalters verwendet werden kann.

Der Hauptschalter selbst kann ein selbstleitender Schalter sein, der also normalerweise geschlossen ist und nur beim Auftreten eines Kurzschlusses von der Stromstärkenerfassungsschaltung geöffnet wird. Dabei kehrt dieser Hauptschalter in seinen leitenden Zustand zurück, sobald die signifikante Temperaturerhöhung wieder zurückgegangen ist. Dies führt dazu, dass zwar bei weiterhin vorhandenen Kurzschluss der LED-Lampe die Temperatur des von dem Kurzschlussstrom durchflossenen Bauteils wieder ansteigt und so die Stromstärkenerfassungsschaltung den Hauptschalter erneut öffnet. Wenn jedoch auf die Fehlermeldung der Spannungsversorgung hin die fehlerhafte LED-Lampe gegen eine fehlerfreie LED-Lampe ausgetauscht wurde, kann diese sofort mit dem erfindungsgemäßen LED-Adapter betrieben werden, ohne dass dieser speziell zurückgesetzt werden muss.

Die Stromstärkenerfassungsschaltung des erfindungsgemäßen Adapters kann insbesondere Teil eines kommerziell verfügbaren Treiberbausteins mit definiertem ohmschen Widerstand und Kurzschlussschutz, d. h. automatischer Abschaltung im Falle einer Stromstärke oberhalb eines Grenzwerts sein. Da der Adapter ansonsten nur aus der Glühlampenverbrauchssimulationsschaltung besteht, die ein einfacher elektrischer Widerstand sein kann, ist der erfindungsgemäße Adapter für jede LED-Lampe und damit auch für eine Mehrzahl von LED-Lampen einfach aufgebaut und entsprechend kostengünstig herstellbar.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Schutzes Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den abhängigen Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Wenn hingegen nur die genaue Anzahl eines Merkmals angegeben werden soll, findet das Adjektiv "genau" vor dem jeweiligen Merkmal Verwendung. Diese Merkmale können durch andere Merkmale ergänzt werden oder die einzigen Bestandteile bezeichnen, aus denen das jeweilige Erzeugnis besteht.

### KURZBESCHREIBUNG DER FIGUREN

Die Erfindung wird im Folgenden unter Bezugnahme auf die beigefügten Zeichnungen anhand von Ausführungsbeispielen näher erläutert und beschrieben.
- **Fig. 1**: illustriert eine erste Ausführungsform des erfindungsgemäßen Adapters zwischen einer Spannungsversorgung und einer Beleuchtungsvorrichtung mit mehreren LED-Lampen.
- **Fig. 2**: zeigt eine weiter detaillierte Ausführungsform des erfindungsgemäßen Adapters zwischen einer Spannungsversorgung und einer LED-Lampe; und
- **Fig. 3**: zeigt eine noch weiter detaillierte Ausführungsform des erfindungsgemäßen Adapters.

### FIGURENBESCHREIBUNG

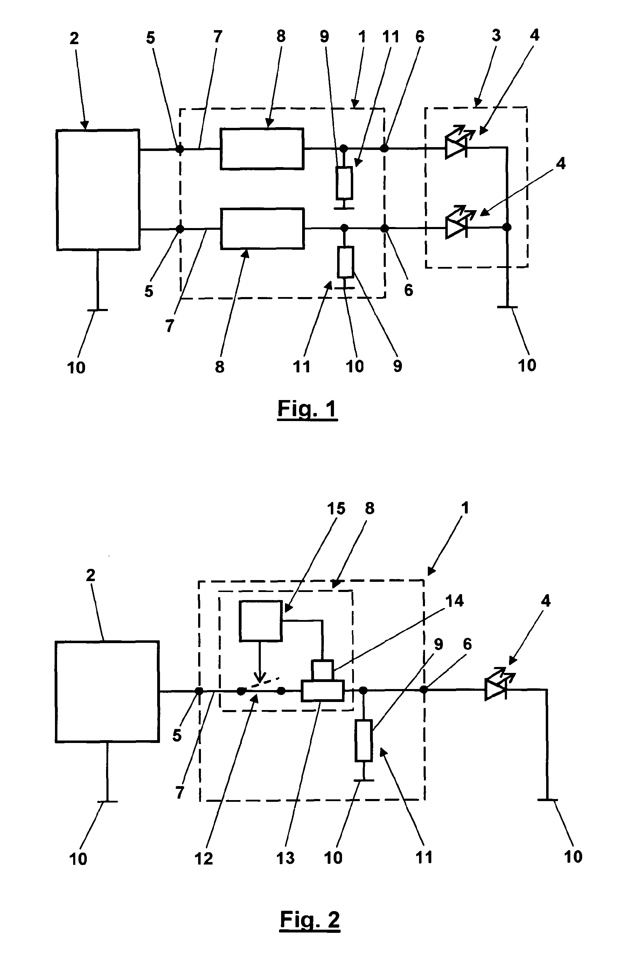

**Fig. 1** zeigt einen Adapter 1, der zwischen eine Spannungsversorgung 2 und eine Beleuchtungseinrichtung 3 geschaltet ist. Die Spannungsversorgung 2 ist beispielsweise eine Kraftfahrzeugelektrik und weist eine Funktionsüberwachungseinrichtung für angeschlossene Glühlampen auf. Die Beleuchtungseinrichtung 3 weist jedoch LED-Lampen 4 auf, die hier jeweils durch ein LED-Symbol wiedergegeben sind, die aber in der Regel mehrere einzelne LEDs umfassen. Die LED-Lampen 4 weisen eine geringere Betriebsspannung und einen geringeren Verbrauch an elektrischer Leistung als Glühlampen auf. Um sie dennoch mit der Spannungsversorgung 2 betreiben zu können und dabei auch die Funktionsüberwachungseinrichtung der Spannungsversorgung 2 nutzen zu können, ist der Adapter 1 vorgesehen. Der Adapter 1 weist dazu für jede LED-Lampe 4 einen Eingang 5, über den der Adapter 1 an die Spannungsversorgung 2 angeschlossen ist, und einen Ausgang 6 auf, über den die jeweilige Glühlampe 4 angeschlossen ist. In einer Leitung 7 von dem jeweiligen Eingang 5 zu dem jeweiligen Ausgang 6 ist ein Treiberbaustein 8 vorgesehen, der einen festen ohmschen Widerstand und einen Kurzschlussschutz aufweist, d. h., der die Leitung 7 beim Auftreten von Strömen mit einer Stromstärke oberhalb eines Grenzwerts unterbricht. Der ohmsche Widerstand des Treiberbausteins 8 bildet zusammen mit einem elektrischen Widerstand 9, der parallel zu dem jeweiligen Anschluss 6 und damit zu der daran angeschlossenen LED-Lampe 4 nach Masse 10 geschaltet ist, einen Spannungsteiler aus, der die Ausgangsspannung der Spannungsversorgung 2 für den Betrieb der LED-Lampe 4 herabsetzt. Der elektrische Widerstand 9 bildet zudem eine Glühlampenverbrauchssimulationsschaltung 11 mit festen ohmschen Widerstand aus, die zusammen mit der jeweiligen LED-Lampe 4 elektrische Leistung verbraucht, wie sie dem Verbrauch an elektrischer Leistung durch eine funktionierende Glühlampe entspricht. Bei funktionierender LED-Lampe 4 wird so der Funktionsüberwachungseinrichtung der Spannungsversorgung 2 eine ordnungsgemäße Glühlampe angezeigt. Wenn eine Glühlampe 4 ausfällt oder beschädigt ist und dadurch keine oder zumindest weniger elektrische Leistung verbraucht, reicht die allein von der Glühlampenverbrauchssimulationsschaltung 11 verbrauchte elektrische Leistung nicht aus, um eine ordnungsgemäß funktionierende Glühlampe zu simulieren. Entsprechend erkennt die Funktionsüberwachungseinrichtung der Spannungsversorgung 2 auf einen Fehler. Wenn hingegen eine Beschädigung einer LED-Lampe 4 einen Kurzschluss der LED-Lampe zur Folge hat, tritt ein Strom mit einer Stromstärke oberhalb des Grenzwerts des Treiberbausteins 8 auf, der die jeweilige Leitung 7 daher unterbricht. Damit reduziert sich der Verbrauch an elektrischer Leistung zu Null, was ebenfalls von der Funktionsüberwachungseinrichtung der Spannungsversorgung 2 als Hinweis auf einen Fehler der jeweiligen LED-Lampe 4 erkannt wird.

**Fig. 2** zeigt für nur eine LED-Lampe 4 eine mögliche Ausgestaltung des Treiberbausteins 8. Dieser umfasst einen Hauptschalter 12 und einen weiteren elektrischen Widerstand 13, die in der Leitung 7 zwischen dem Eingang 5 und dem Ausgang 6 in Reihe geschaltet sind, und zwar vor der Verzweigung der Leitung 7 zu der Glühlampenverbrauchssimulationsschaltung 11. Der elektrische Widerstand 13 gibt den ohmschen Widerstand des Treiberbausteins 8 vor. Zugleich dient er der Messung der Stromstärke des durch die Leitung 7 fließenden Stroms, in dem sich der elektrische Widerstand 13 mit zunehmender Stromstärke des Stroms zunehmend erwärmt, was durch ein Bauteil 14 erfasst wird, das thermisch an den elektrischen Widerstand 13 gekoppelt ist und das Teil einer Stromstärkenerfassungsschaltung 15 ist. Wenn die Stromstärkenerfassungsschaltung 15 aufgrund der Erwärmung des elektrischen Widerstands 13 und in der Folge des Bauteils 14 einen Kurzschlussstrom erkennt, öffnet sie den Hauptschalter 12.

In Fig. 2 sind der Hauptschalter 12, der selbst leitend ist und der elektrische Widerstand 13 als getrennte Bauteile dargestellt. Sie könnten aber auch zu einem einzigen Bauteil, beispielsweise einem Halbleiterbauteil wie insbesondere einem Halbleiterschalter kombiniert sein.

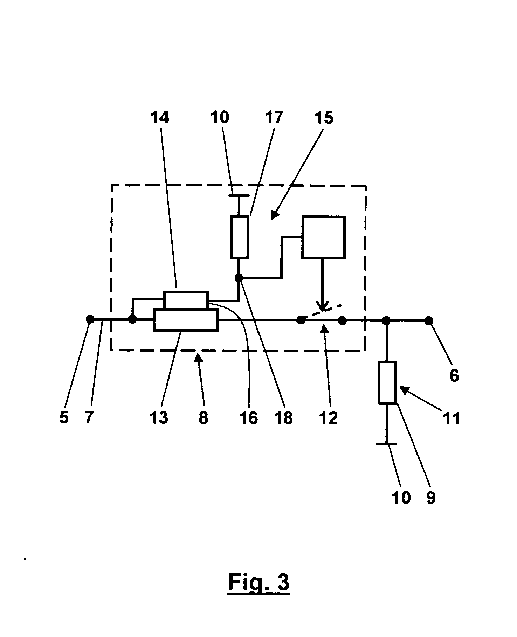

**Fig. 3** zeigt eine mögliche weitere Detailausgestaltung des Treiberbausteins 8, wobei hier zudem die Reihenfolge des elektrischen Widerstands 13 und des Hauptschalters 12 in der Leitung 7 vor deren Verzweigung zu der Glühlampenverbrauchssimulationsschaltung 11 vertauscht ist. Das Bauteil 14 ist hier ein temperaturabhängiger elektrischer Widerstand 16, der mit einem weiteren elektrischen Widerstand 17 einen Spannungsteiler für die Eingangsspannung an dem Anschluss 5 gegenüber Masse 10 ausbildet. Diese Spannung benutzt die Stromstärkenerfassungsschaltung 15 direkt oder indirekt zum Ansteuern des Hauptschalters 12. So ist die Spannung an dem Mittelpunkt 18 des Spannungsteiler bei geringer Temperatur und entsprechend geringem Widerstand des temperaturabhängigen Widerstands 16 nahe der Eingangsspannung an dem Eingang 5 und verschiebt sich mit zunehmenden Widerstand des temperaturabhängigen Widerstands 16 hin zur Masse 10. Solange wie die Temperatur des Widerstands 13 noch hoch ist, ändert sich diese Spannung an dem Punkt 17 auch nicht durch das Öffnen des Hauptschalters 12. Sie geht erst mit abnehmender Temperatur des Widerstands 13 und damit des Bauteils 14 sowie abhängig von der Auslegung der Stromstärkenerfassungsschaltung 15 zurück.

### BEZUGSZEICHENLISTE

- 1: Adapter
- 2: Spannungsversorgung
- 3: Beleuchtungseinrichtung
- 4: LED-Lampe
- 5: Eingang
- 6: Ausgang
- 7: Leitung
- 8: Treiberbaustein
- 9: elektrischer Widerstand
- 10: Masse
- 11: Glühlampenverbrauchssimulationsschaltung
- 12: Hauptschalter
- 13: elektrischer Widerstand
- 14: Bauteil
- 15: Stromstärkenerfassungsschaltung
- 16: temperaturabhängiger Widerstand
- 17: elektrischer Widerstand
- 18: Mittelpunkt

## Patentansprüche

1. Adapter (1) zum Anschluss von LED-Lampen (4) an eine Spannungsversorgung (2) mit Funktionsüberwachungseinrichtung für Glühlampen, wobei der Adapter (1)
- eine parallel zu einem Ausgang (6) für den Anschluss einer LED-Lampe (4) geschaltete Glühlampenverbrauchssimulationsschaltung (11),
- eine Stromstärkenerfassungsschaltung (15) zur Erfassung der Stromstärke des Stroms durch eine von einem Eingang (5) des Adapters (1) zu dem Ausgang (6) für den Anschluss der LED-Lampe (4) führenden Leitung (7) und
- einen Hauptschalter (12) aufweist,
- der in der von dem Eingang (5) des Adapters (1) zu dem Ausgang (6) für den Anschluss der LED-Lampe (4) führenden Leitung (7) vorgesehen ist und
- der von der Stromstärkenerfassungsschaltung (15) beim Auftreten einer Stromstärke oberhalb eines Grenzwerts geöffnet wird,
**dadurch gekennzeichnet, dass** die Glühlampenverbrauchssimulationsschaltung (11) einen festen ohmschen Widerstand aufweist und aus einem einzigen elektrischen Widerstand oder einer Reihen- und/oder Parallelschaltung elektrischer Widerstände besteht.

2. Adapter (1) nach Anspruch 1, **dadurch gekennzeichnet, dass** die Glühlampenverbrauchssimulationsschaltung (11) aus einem einzigen elektrischen Widerstand (9) besteht.

3. Adapter (1) nach Anspruch 1 oder 2, **dadurch gekennzeichnet, dass** der feste ohmsche Widerstand der Glühlampenverbrauchssimulationsschaltung (11) so abgestimmt ist, dass die Funktionsüberwachungseinrichtung auf einen Fehler einer angeschlossenen Glühlampe erkennt, wenn kein Strom durch die LED-Lampe (4) fließt.

4. Adapter (1) nach einem der vorhergehenden Ansprüche, **dadurch gekennzeichnet, dass** der Grenzwert für die Stromstärke so abgestimmt ist, dass die Stromstärkenerfassungsschaltung (15) den Hauptschalter (12) öffnet, wenn ein Kurzschlussstrom durch die LED-Lampe (4) fließt.

5. Adapter (1) nach einem der vorhergehenden Ansprüche, **dadurch gekennzeichnet, dass** der Hauptschalter (12) vor der Verzweigung zu der Glühlampenverbrauchssimulationsschaltung (11) in der von dem Eingang (5) des Adapters (1) zu dem Ausgang (6) für den Anschluss der LED-Lampe (4) führenden Leitung (7) vorgesehen ist.

6. Adapter (1) nach einem der vorhergehenden Ansprüche, **dadurch gekennzeichnet, dass** die Stromstärkenerfassungsschaltung (15) die Stromstärke des Stroms durch den Hauptschalter (12) erfasst.

7. Adapter (1) nach einem der vorhergehenden Ansprüche, **dadurch gekennzeichnet, dass** die Stromstärkenerfassungsschaltung (15) die Stromstärke oberhalb des Grenzwerts aufgrund einer Temperaturerhöhung eines von dem Strom mit der Stromstärke durchflossenen Bauteils erkennt.

8. Adapter (1) nach Anspruch 7, **dadurch gekennzeichnet, dass** das Bauteil ein weiterer elektrischer Widerstand (13) ist, der zusammen mit der parallel zu dem Ausgang (6) für den Anschluss der LED-Lampe (4) geschalteten Glühlampenverbrauchssimulationsschaltung (11) einen Spannungsteiler ausbildet.

9. Adapter (1) nach Anspruch 7 oder 8, **dadurch gekennzeichnet, dass** die Temperaturerhöhung durch ein mit dem Bauteil thermisch gekoppeltes weiteres Bauteil (14) erfasst wird, das temperaturabhängige elektrische Eigenschaften aufweist.

10. Adapter (1) nach einem der vorhergehenden Ansprüche, **dadurch gekennzeichnet, dass** der Hauptschalter (12) ein selbstleitender Schalter ist.

11. Adapter (1) nach einem der vorhergehenden Ansprüche, **dadurch gekennzeichnet, dass** die Stromstärkenerfassungsschaltung (15) Teil eines Treiberbausteins (8) ist.

12. Adapterstecker für den Anschluss einer Beleuchtungseinrichtung (3), insbesondere für einen Kfz-Anhänger oder Kfz-Heckträger, mit einer LED-Lampe (4) an eine Anhängersteckdose, wobei der Adapterstecker einen Adapter (1) nach einem der vorhergehenden Ansprüche aufweist.

13. Beleuchtungsvorrichtung, insbesondere für einen Kfz-Anhänger oder Kfz-Heckträger, mit einer LED-Lampe (4) und dem Adapter (1) oder Adapterstecker nach einem der vorhergehenden Ansprüche.

## Claims

1. Adaptor (1) for connecting LED-lamps (4) to a voltage supply (2) with operation monitoring equipment for filament lamps, wherein the adaptor (1)
- has an filament lamp consumption simulation circuitry (11) connected in parallel to an output (6) for the connection of an LED-lamp (4),
- an amperage determination circuitry (15) for determining the amperage of the current through a line (7) leading from an input (5) of the adaptor (1) to the output (6) for the connection of the LED-lamp (4), and
- a main switch (12),
- which is provided in the line (7) leading from the input (5) of the adaptor (1) to the output (6) for the connection of the LED-lamp (4) and
- which is opened by the amperage determination circuitry (15) upon occurrence of an amperage above a threshold value,
**characterised in that** the filament lamp consumption simulation circuitry (11) has a fixed ohmic resistance and consists of a single electric resistor or a series and/or parallel connection of electric resistors.

2. Adaptor (1) of claim 1, **characterised in that** the filament lamp consumption simulation circuitry (11) consists of a single electric resistor (9).

3. Adaptor (1) of claim 1 or 2, **characterised in that** the fixed ohmic resistance of the filament lamp consumption simulation circuitry (11) is tuned such that the operation monitoring device determines an error of a connected filament lamp if no current flows through the LED-lamp (4).

4. Adaptor (1) of any of the preceding claims, **characterised in that** the threshold value for the amperage is tuned such that the amperage determination circuitry (15) opens the main switch (12) when a short-circuit current flows through the LED-lamp (4).

5. Adaptor (1) of any of the preceding claims, **characterised in that** the main switch (12) is provided within the line (7) leading from the input (5) of the adaptor (1) to the output (6) for the connection of the LED-lamp (4) in front of a branching-off towards the filament lamp consumption simulation circuitry (11).

6. Adaptor (1) of any of the preceding claims, **characterised in that** the amperage determination circuitry (15) determines the amperage of the current through the main switch (12).

7. Adaptor (1) of any of the preceding claims, **characterised in that** the amperage determination circuitry (15) detects the amperage above the threshold value due to an increase in temperature of a component through which the current of the amperage flows.

8. Adaptor (1) of claim 7, **characterised in that** the component is a further electric resistor (13) which, together with the filament lamp consumption simulation circuitry (11) connected in parallel to the output (6) for the connection of the LED-lamp (4), makes up a voltage divider.

9. Adaptor (1) of claim 7 or 8, **characterised in that** the increase of temperature is detected by a further component (14) thermally coupled to the component and having temperature dependent electric properties.

10. Adaptor (1) of any of the preceding claims, **characterised in that** the main switch (12) is a normally-on switch.

11. Adaptor (1) of any of the preceding claims, **characterised in that** the amperage determination circuitry (15) is part of a driver module (8).

12. Adaptor plug for connecting a illumination device (3), particularly for a motor vehicle trailer or motor vehicle rear carrier, comprising an LED-lamp (4) to a trailer socket, wherein the adaptor plug comprises an adaptor (1) of any of the preceding claims.

13. Illumination apparatus, particularly for a motor vehicle trailer or motor vehicle rear carrier, comprising an LED-lamp (4) and the adaptor (1) or adaptor plug of any of the preceding claims.

## Revendications

1. Adaptateur (1) destiné au raccordement de lampes à DEL (4) sur une alimentation en tension (2) dotée d'un dispositif de surveillance de fonction pour lampes à incandescence, l'adaptateur (1) présentant :
- un circuit de simulation de consommation de lampe à incandescence (11) monté en parallèle avec une sortie (6) pour le raccordement d'une lampe à DEL (4),
- un circuit de détection de l'intensité du courant (15) destiné à détecter l'intensité du courant à travers une ligne (7) allant d'une entrée (5) de l'adaptateur (1) à la sortie (6) pour le raccordement de la lampe à DEL (4), et
- un commutateur principal (12),
- qui est prévu dans la ligne (7) allant de l'entrée (5) de l'adaptateur (1) à la sortie (6) pour le raccordement de la lampe à DEL (4) et
- qui est ouvert par le circuit de détection de l'intensité de courant (15) lorsqu'une intensité de courant supérieure à une valeur limite survient,
**caractérisé en ce que** le circuit de simulation de consommation de lampe à incandescence (11) présente une résistance ohmique fixe et il est constitué d'une résistance électrique unique ou d'un montage en série et/ou en parallèle de résistances électriques.

2. Adaptateur (1) selon la revendication 1, **caractérisé en ce que** le circuit de simulation de consommation de lampe à incandescence (11) est constitué d'une résistance électrique unique (9).

3. Adaptateur (1) selon la revendication 1 ou 2, **caractérisé en ce que** la résistance ohmique fixe du circuit de simulation de consommation de lampe à incandescence (11) est conçue de telle sorte que le dispositif de surveillance de fonction reconnaît sur la base d'une défaillance d'une lampe à incandescence raccordée quand aucun courant ne circule à travers la lampe à DEL (4).

4. Adaptateur (1) selon l'une des revendications précédentes, **caractérisé en ce que** la valeur limite pour l'intensité du courant est déterminée de telle sorte que le circuit de détection de l'intensité de courant (15) ouvre le commutateur principal (12) quand un courant de court-circuit circule à travers la lampe à DEL (4).

5. Adaptateur (1) selon l'une des revendications précédentes, **caractérisé en ce que** le commutateur principal (12) est prévu avant l'embranchement vers le circuit de simulation de consommation de lampe à incandescence (11) dans la ligne (7) allant de l'entrée (5) de l'adaptateur (1) à la sortie (6) pour le raccordement de la lampe à DEL (4).

6. Adaptateur (1) selon l'une des revendications précédentes, **caractérisé en ce que** le circuit de détection de l'intensité de courant (15) détecte l'intensité du courant à travers le commutateur principal (12).

7. Adaptateur (1) selon l'une des revendications précédentes, **caractérisé en ce que** le circuit de détection de l'intensité de courant (15) reconnaît l'intensité du courant au-dessus d'une valeur limite sur la base d'une augmentation de la température d'un composant traversé par le courant à l'intensité du courant.

8. Adaptateur (1) selon la revendication 7, **caractérisé en ce que** le composant est une résistance électrique supplémentaire (13), qui en conjonction avec le circuit de simulation de consommation de lampe à incandescence (11) monté en parallèle avec la sortie (6) pour le raccordement de la lampe à DEL (4), forme un diviseur de tension.

9. Adaptateur (1) selon la revendication 7 ou 8, **caractérisé en ce que** l'augmentation de température est déterminée par un composant supplémentaire (14) couplé thermiquement avec le composant, qui possède des propriétés électriques liées à la température.

10. Adaptateur (1) selon l'une des revendications précédentes, **caractérisé en ce que** le commutateur principal (12) est un commutateur autoconducteur.

11. Adaptateur (1) selon l'une des revendications précédentes, **caractérisé en ce que** le circuit de détection de l'intensité de courant (15) fait partie d'un module d'étage d'attaque (8).

12. Fiche d'adaptateur pour le raccordement d'un dispositif d'éclairage (3), en particulier pour une remorque de véhicule automobile ou un porte-charge de véhicule automobile, ayant une lampe à DEL (4) sur une prise de courant de remorque, la fiche d'adaptateur présentant un adaptateur (1) selon l'une des revendications précédentes.

13. Dispositif d'éclairage, en particulier pour une remorque de véhicule automobile ou un porte-charge de véhicule automobile, ayant une lampe à DEL (4) et l'adaptateur (1) ou la fiche d'adaptateur selon l'une des revendications précédentes.
